# EUROPÄISCHE PATENTSCHRIFT

(11) **EP 0 889 334 B1**
(45) Veröffentlichungstag und Bekanntmachung des Hinweises auf die Patenterteilung: **06.03.2002**
(21) Anmeldenummer: 98108776.0
(22) Anmeldetag: 14.05.1998
(51) Int. Cl.: G02B 5/124, G01D 5/26

(54) **Auf der Retroreflexion eines Laserstrahles basierende Sensoreinrichtung**
Sensor device based on retroreflection of a laser beam
Dispositif à capteur basé sur la rétroréflection d'un rayon laser

(30) Priorität: 30.06.1997 DE 19727527
(43) Veröffentlichungstag der Anmeldung: 07.01.1999
(73) Patentinhaber: Gubela, Hans-Erich, Sen., 77887 Sasbachwalden (DE)
(72) Erfinder: Gubela, Hans-Erich, Sen., 77887 Sasbachwalden (DE)
(74) Vertreter: Zipse + Habersack

(56) Entgegenhaltungen:
- DE-A1- 4 240 680
- DE-B2- 2 159 950
- DE-U1- 29 701 903
- US-A- 4 202 600

## Beschreibung

Die Erfindung betrifft ein Verfahren für eine Sensoreinrichtung, die auf der Retroreflexion eines Laserstrahles basiert.

Ziel dieser Sensoreinrichtung ist es, für die auf Retroreflexion und Polasationsdrehung basierende Lasersensorik eine in der Praxis einfach zu handhabende retroflektive Fläche zu schaffen, die ein konturenscharfes Lasersignal zur Auswertung liefert und damit wesentlich bessere, hochauflösende Feinabtastung ermöglicht.

In der DE 42 40 680 A1 ist ein Verfahren zur Herstellung von strukturierten Mikrotripel-Reflexflächen beschrieben, gemäß welchem die retroreflektierenden Mikrotripel würtelähnlich sind und einen Durchmesser von 0,002 mm bis 0,8 mm haben und in Gruppen gleicher Mikrotripel zusammengefaßt sind, wobei der Durchmesser der Gruppen kleiner als 7 mm ist und mindestens zwei Gruppen und/oder mehr die Reflexfläche bilden.

In der JP 6-273608, Patent abstracts of Japan, ist ein Rückstrahler beschrieben, der eine große Reflexionseffizienz aufweist durch Bildung einer Mehrzahl von Würfelecken, die im gemischten Zustand auf der Reflexionsfläche und mit verschiedenen Formaten angeordnet sind.

In der Sensorik sind auf Retroreflexion und Polarisationsdrehung basierende Lasersensorsysteme z. B. als Reflexlichtschranken bekannt. Diese mit Laserlicht und Polarisationsfilter arbeitenden Reflexlichtschranken werden mit Retroreflektoren verwendet. Als Retroreflektoren gibt es dazu großformatig geschliffene, teuere Glastripel, Hohlspiegel aus Metall und herkömmliche Tripelrückstrahler aus Glas oder Kunststoff. Die Strahlunterbrechung des retroreflektierten Strahles zwischen Retroreflektor und Sender/Empfänger wird als binäres Signal interpretiert.

Bei der Entfernungsmessung mit Reflexsensorsystemen wird die benötigte Zeit bis zur Rückkehr des retroreflektierten Strahles zur Berechnung des Weges ermittelt. Es wird heute Laserlicht bevorzugt, um die Aufspreizung des Lichtstrahles möglichst gering zu halten und so ein konturscharfes und energetisch starkes Signal zur Auswertung zu erhalten.

Bei der Gasanalyse wird das im gasdurchströmten Raum veränderte Spektrum des retroreflektierten Strahles ausgewertet.

Um Fehler bei der Signalauswertung zu vermeiden, wird der Laserstrahl oft zusätzlich polarisiert und/oder gepulst und/oder auf bestimmte Lichtspektren begrenzt.

Entscheidend ist bei allen genannten Systemen, einen möglichst konturscharfen retroreflektierten Strahl für die Signalauswertung zu erhalten, der von Fremdlicht oder unerwünschten Reflexionsstrahlen unterscheidbar ist.

Solche unerwünschten Reflexionsstrahlen bilden sich z. B. bei der Beobachtung von Glaskörpern in einer Flaschenabfüllanlage. Ebenso entstehen Reflexionen auf Metall-, Lack- oder Kunststoff-Oberflächen, z. B. bei der sensorischen Beobachtung von Paketen in der Paketverteilung, in Förderanlagen, bei der sensorischen Abtastung von Kraftfahrzeugen in Waschanlagen.

Die Feinauflösung des Reflexsensorsystems ist davon abhängig, daß der Retroreflektor ein konturscharfes, ein nicht mit Fremdstrahlung verwechselbares Signal erhält.

Um dies zu erreichen, wird Laserlicht bevorzugt. Jedoch zeigt sich, daß herkömmliche Retroreflektoren in ausreichender Präzision zu unwirtschaftlich in der Herstelllung sind oder aber den Laserstrahl nachteilig verändern, wenn die Lichtquelle sich bewegt, z. B. durch Erschütterungen, wenn der Sensor an einer Maschine befestigt ist.

Durch das Verfahren gemäß der Erfindung soll eine wesentliche Verbesserung der Feinabtastung durch das Sensorsystem durch exakte Umlenkung des Laserstrahles im Retroflektor und Rücksendung eines konturenscharfen Signals bewirkt werden.

Zur Lösung dieser Aufgabe wird ein Verfahren, das auf der Retroreflexion eines Laserstrahls basiert, gemäß Patentanspruch 1 vorgeschlagen. Hierbei sind folgende Regeln zu beachten.

### Regel 1:

Der Retroflektor soll aus einer Fläche, vieler aneinandergereihter, kleiner Tripel bestehen. Je kleiner der Tripel, je kleiner ist auch der störende Strahlversatz zwischen eingehendem und ausgehendem Lichtstrahl.

### Regel 2:

Zum Bau eines solchen aus vielen Tripeln bestehenden Retroflektors für die Lasersensorik wird als einzig geeigneter Retroflexionskörper vorgeschlagen der würfelförmige Fullcube, oder auch Perkin-Elmer-Pyramide genannt. Seine rechteckigen Reflexionsflächen stehen mit etwa 90° zueinander.

Dagegen eignet sich nicht der pyramidale Tripel, der nur ein Würfeleckenabschnitt ist.

Für die folgende Erklärung wird angenommen, daß das eintreffende Licht exakt senkrecht zur Oberfläche des pyramidalen Tripelretroflektors eintrifft.

Die Reflexionsflächen des pyramidalen Tripels sind dreieckig. Auf Ihnen befinden sich Teilflächen, die bei der Strahlumlenkung keine geeigneten Referenzpunkte auf den anderen Teilflächen des Tripels finden, um die eintreffenden Laserstrahlen vollständig zu retroflektieren. Die Strahlen, die keine geeigneten Referenzpunkte für die Lichtumlenkung gefunden haben, um zurückzukehren, werden durch den Glaskörper des aus vielen Tripeln bestehenden Retroflektors gesandt. Diese Strahlen werden hier Glaskörperirrstrahlen genannt.

Bei ihrem Weg durch den Glaskörper des pyramidalen Tripelretroflektors treffen die Glaskörperirrstrahlen dann auf einen benachbarten Tripel und dringen in ihm ein. Innerhalb des Nachbartripels treffen sie auf eine Reflexionsfläche, die die Strahlen nun zurückkehren läßt. Als Ergebnis erhält man statt eines retroflektierten Strahlenbündels sieben Retroflexionsstrahlenbündel.

Betrachtet man die Pyramiden von oben, so erkennt man, daß jeweils 2 Pyramiden eine gemeinsame Kathete haben, und daß diese Tripel zueinander um 180° gedreht sind. Ein pyramidaler Retroflektor besteht also aus zwei Gruppen gleichartiger, aber in ihrer Ausrichtungslage verschiedener Tripel.

Jede Ecke des Fußes einer solchen Tripel-Pyramide hat einen Teilbereich, dem die dritte Referenzfläche für einen vollständigen Strahlengang für die Retroflexion fehlt. Jede Ecke erzeugt also ein Strahlenbündel von Glaskörperirrstrahlen, die durch den optischen Glaskörper irren, bis sie auf wirksame Umlenkflächen trefffen.

So entstehen aus zwei mal drei Ecken, die alle in eine andere Richtung zeigen, sechs getrennte Strahlenbündel, die aus Glaskörperirrstrahlen bestehen und in Nachbartripeln erst die geignete Referenzfläche gefunden haben, um zurückzukehren. Alle sechs Glaskörperirrstrahlenbündel bilden bei ihrer Rückkehr ein Muster, das den Eckpunkten eines Sechsecks entspricht. Denn alle Richtungen der Ecken der Pyramiden, sind jeweils 60° verdreht zueinander.

Der ausgesendete Laserstrahl, der hier als Sendestrahlbündel bezeichnet werden muß, trifft auf eine oder mehrere pyramidale Tripel, abhängig davon, ob er im Durchmesser nur eine oder mehrere Lichteintrittsflächen der Tripel trifft. Die Lichteintrittsfläche ist ein Dreieck und ist der Fuß der dreiseitigen Pyramide.

Der Teil des ausgesendeten Laserstrahlbündels, der in das Zentrum der Pyramide oder Pyramiden trifft und dort geeignete Referenzpunkte zur Lichtumlenkung und vollständigen Retroflexion findet, kehrt als Zentralstrahlenbündel zurück. So ergibt sich bei senkrechter Bestrahlung des pyramidalen Retroflektors mit einem Laserstrahlenbündel ein Retroflexionsmuster, das aus einem Zentralstrahlenbündel und sechs umgebenden Glaskörperirrstrahlen besteht.

Der pyramidale Retroflektor antwortet auf ein ausgesendetes Laserstrahlbündel, dem Sendestrahlbündel, mit sieben getrennten Laserstrahlbündeln, nämlich dem retroflektiertem Zentralstrahlbündel und sechs Glaskörperirrstrahlenbündeln. Deshalb ist der pyramidale Retroflektor zur Feinabtastung mit Laserlicht ungeignet.

Dagegen antwortet der Retroflektor aus würfelförmigen Fullcube-Tripeln mit einem einzigen Zentralstahlbündel. Diese Lehre ist besonders wichtig, um zu verstehen, warum Retroflektoren mit Fullcube-Tripeln für das erfindungsgemäße Verfahren vorgeschlagen werden.

### Regel 4:

Mit der Kleinheit der Tripel wächst die Positionsgenauigkeit des Meßsystems.

Das erfindungsgemäße Verfahren zeigt die Verwendung eines Retroflektors, der aus einer Vielzahl von Tripeln besteht. Denn viele kleine Tripel sind einem großen Tripel vorzuziehen. Je kleiner die Tripel, um so kleiner ist der Strahlversatz.

Für ein exaktes Meßsystem ist die Form des retroflektierten Strahlenbündels entscheidend.

Was aber bei bisherigen Retroflektoren, die aus einer Vielzahl von Tripeln bestehen, außeracht gelassen wurde, ist, daß das Sendestrahlbündel seine Form verändert, wenn es retroflektiert wird.

Eine einfache Ursache ist, daß die reflektierenden Teilflächen der Tripel nicht im Winkel exakt stehen oder die Teilflächen nicht planeben sind, sondern rauh oder gewölbt. Aber auch wenn die Teilflächen optisch korrekt gestaltet sind, sind weitere wichtige Regeln zu beachten.

### Regel 5:

Die Fullcube-Tripel müssen zueinander absolut gleichmäßig ausgerichtet sein. Sonst wird das retroflektierte Strahlenbündel unnötig aufgeweitet und verformt.

### Regel 6:

Die Fullcube-Tripel müssen so klein gewählt werden, daß das Sendestrahlbündel mindestens 5 Fullcube-Tripel des Retroflektors trifft. Wird die Zahl der getroffenen Tripel erhöht, steigt die relative Formstabilität des retroflektierten Strahlenbündels.

Die Ursache für die Formveränderung des retroflektierten Strahlenbündels liegt in der Geometrie der Fullcube-Tripel. Jeder Fullcube-Tripel hat von oben senkrecht betrachtet eine waagerechte Schnittfläche in Form eines Sechsecks. Alle Fullcube-Tripel bilden also eine Fläche von sechseckigen Spiegeln, hier Waben genannt, die aneinandergereiht ein bienenwabenförmiges Muster ergeben.

Bewegt man nun ein Sendestrahlenbündel in Form eines Kreises oder einer Elypse über die bienenwabenförmigen Spiegelflächen, so verändert sich ständig die Zahl der angesprochenen Spiegel. Man kann den Strahl in seinem Durchmesser oder Form zwar verkleinern, so daß er nur eine Wabe trifft und schmäler und kürzer als die Außenkante einer Wabe ist. Dann jedoch würde der Sendestrahl beim Auftreffen auf die Kante der Wabe nicht mehr retroflektiert.

Der Strahl muß also mindestens so groß sein in seiner Form, daß er beim Übergang von einer Wabe zur nächsten Wabe beide Waben zugleich berührt. Da das Licht im Fullcube-Tripel umgelenkt wird, werden immer drei Punkte in einer Wabe berührt, die abhängig vom Einstrahlwinkel voneinander entfernt liegen, verteilt über die Wabe.

Bewegt man also das Sendestrahlbündel über die Waben und ist es kleiner im Durchmesser als der gedachte Innenkreis eines Sechsecks, dann werden je nach Position ein oder zwei oder drei Waben beleuchtet. Das bedeutet, daß das retroflektierte Strahlenbündel in seiner Form sich während der Bewegung verändert von 100% nach bis zu 200% oder nahezu 300%.

Solche starken Schwankungen der Form des retroflektierten Strahles müssen verhindert werden, um möglichst präzise zu messen. Mit der Vergrößerung der Form des Sendestrahles oder mit der Verkleinerung der Fullcube-Tripel nimmt die Zahl der berührten Waben zu, jedoch die Schwankungsbreite der berührten Waben während der Bewegung des Sendestrahlbündels nimmt ab und damit verringert sich die relative Verformung des retroflektierten Strahlenbündels erheblich.

Es wird deshalb vorgeschlagen, das Sendestrahlbündel in seiner Form so zu wählen, daß es bei Bewegung über den Retroflektor in jeder Position mindestens 5 oder mehr Fullcube-Tripel zugleich berührt. Für Laserabtastungen des Retroflektors wird für die Praxis eine Schlüsselweite der Fullcube-Tripel von 0,002 mm bis 1,4 mm vorgeschlagen, und die Schlüsselweite, den Abstand zweier paralleler Seiten der sechsseitigen Grundfläche des Fullcube-Tripels beschreibt.

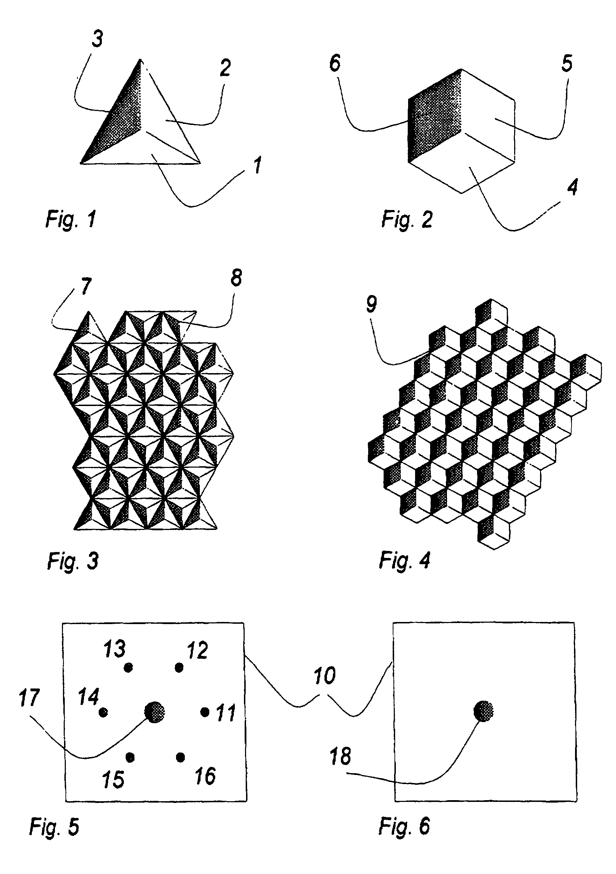

Fig. 1 zeigt einen pyramidalen Tripel, der jeweils aus drei angrenzenden dreieckigen Flächen (1, 2, 3) eines Würfelabschnittes gebildet wird. Die Dreiecke sind als gleichseitige Dreiecke dargestellt, sie können aber auch verschiedene Schenkellängen haben. In der Fig. 1 hat der pyramidale Tripel eine lotrechte Ausrichtung seiner Mittelachse. Die Mittelachse kann aber auch außerhalb des Lotes liegen.

Fig. 2 zeigt einen Fullcube-Tripel, der jeweils aus drei angrenzenden quadratischen Flächen (1, 2, 3) einer Würfelecke gebildet wird. In der Fig. 2 hat der Fullcube-Tripel eine lotrechte Ausrichtung seiner Mittelachse. Die Mittelachse kann aber auch außerhalb des Lotes liegen.

Fig. 3 zeigt einen Ausschnitt eines Retroflektors der aus pyramidalen Tripeln (7, 8), wie in Fig. 1 gezeigt, gebildet wird, wobei die Fläche aus Tripel unterschiedlicher Drehorientierung besteht. Tripel (8) ist um 180° zu Tripel (7) gedreht.

Fig. 4 zeigt einen Ausschnitt eines Retroflektors, der aus Fullcube-Tripeln besteht, deren projezierte Grundfläche jeweils eine sechsseitige Wabe ist. Der Retroflektor ist aus Fullcube-Tripeln (9), wie in Fig. 2 gezeigt, gleicher Ausrichtung gebildet. Er kann aber auch aus Tripeln unterschiedlicher Drehorientierung gebildet sein.

Fig. 5 zeigt eine Monitorfläche (10) eines Meßsystems für retroflektiertes Laserlicht, das einen mit Laserlicht angestrahlten pyramidalen Retroflektor beobachtet. Auf dem Monitor sind die sechs retroflektierten Glaskörperirrstrahlenbündel (11, 12, 13, 14, 15, 16) und das retroflektierte Zentralstrahlbündel (17) sichtbar.

Fig. 6 zeigt eine Monitorfläche (10) eines Meßsystems für retroflektiertes Laserlicht, das einen mit Laserlicht angestrahlten Retroflektor aus Fullcube-Tripeln beobachtet.

Auf dem Monitor sind keine Glaskörperirrstrahlenbündel, sondern nur ein einziges retroflektiertes Zentralstrahlbündel (18) sichtbar.

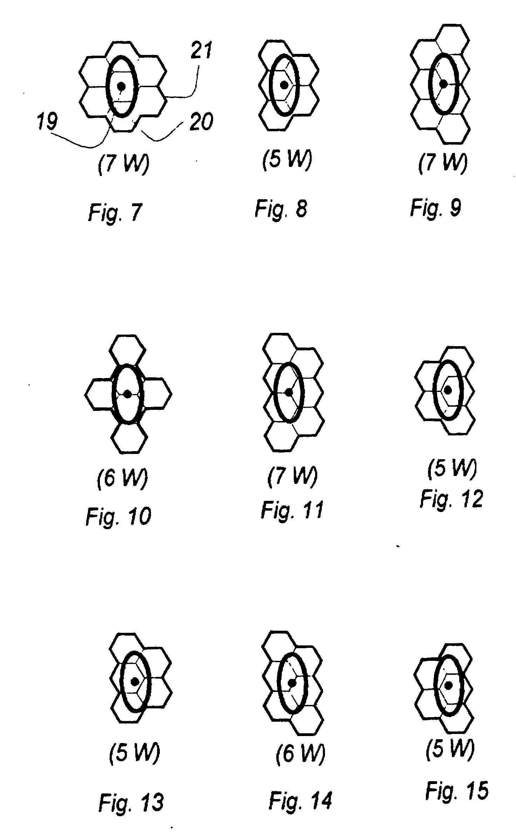

Fig. 7 zeigt ein Laserstrahlbündel in Form einer Elypse (20) und dem Zentrum (19), das auf einen Retroflektor trifft, der aus Fullcube-Tripeln besteht. Die Fullcube-Tripel sind nur mit Ihrer Grundfläche als Wabe dargestellt. Die Elypse berührt 7 Waben. Das bedeutet, bei Retroflexion in diesem Fall, sind 7 Fullcube-Tripel an der Retroflexion des Laserstrahlenbündels beteiligt. Jeder Fullcube-Tripel versetzt die ausgehenden Strahlen zur Achse der eintreffenden Strahlen. Dadurch wird das eintreffende Strahlenbündel bei der Retroflexion in seiner Form verzerrt, abhängig von der Zahl der beteiligten Fullcube-Tripel und ihrer Lage zueinander.

Fig. 8 bis 15 zeigen das gleiche Strahlenbündel in Form einer Elypse. Bei jeder Fig. 8 bis 15 ist aber das Zentrum (19) mit seiner Elypse (20) relativ zur jeweiligen Wabe etwas versetzt. Durch die Positionsänderung des Strahlenbündels werden wechselnde Waben berührt. Dies hat eine jeweils andere Strahlverformung des retroflektierten Strahlenbündels zur Folge.

In Fig. 8 sind 5 Waben vom Strahlenbündel berührt, in Fig. 9 sind 7 Waben, in Fig. 10 sind 6 Waben, in Fig. 11 sind 7 Waben, in Fig. 12 sind 5 Waben, in Fig. 13 sind 5 waben, in Fig. 14 sind 6 Waben und in Fig. 15 sind 5 Waben berührt.

Somit ist in diesem Beispiel die niedrigste Wabenzahl 5 und höchste Wabenzahl 7. Die dargestellte Elypse entspricht also einem Laserstrahlbündel in der vorgeschlagenen, relativen Mindestgröße von 5 Fullcube-Tripeln.

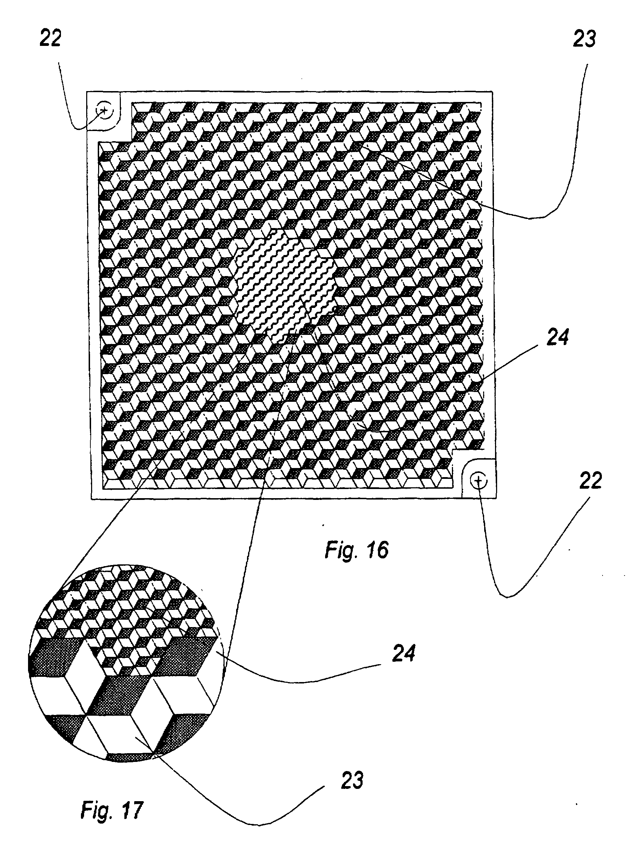

Fig. 16 zeigt eine Sonderausbildung des Mikroretroflektors. Es ist ein beispielhafter Retroflektor aus zwei verschieden großen Fullcube-Tripeln. Der Retroflektor mit ca. 100 x 100 mm Kantenlänge besitzt zwei Schraublöcher (22) zur Befestigung. Der überwiegende Teil des Retroflektors ist aus Fullcube-Tripeln (23) mit einer Schlüsselweite von 4 mm gebildet. Im Zentrum des Retroflektors befindet sich eine Fläche (24) von kleineren Fullcube-Tripeln in der Größe von etwa 1 mm Schlüsselweite.

Auch bei dieser Sonderausbildung werden die genannten Regeln gewahrt.

Fig. 17 zeigt eine Ausschnittvergrößerung eines Bereiches der Fig. 16, in der die Flächen aus großformatigen Fullcube-Tripeln (23) an die Fläche der kleinformatigen Fullcube-Tripel (24) trifft. Beide Flächen berühren sich ohne besondere Trennlinie.

Diese Bauweise ist dann vorteilhaft, wenn der Retroflektor aus sehr unterschiedlichen Entfernungen beobachtet werden soll. Mit zunehmender Entfernung nimmt der Durchmesser des Sendestrahlbündels naturgemäß zu und berührt eine immer größere Fläche des Retroflektors. Hat das auf die Mitte des Retroflektors gerichtete Sendestrahlbündel einen Durchmesser in diesem Beispiel von etwa 30 mm überschritten, dann berührt es nicht nur die kleinformatigen Fullcube-Tripel, sondern auch die großformatigen Fullcube-Tripel. Letztere haben im allgemeinen eine etwas höhere Retroflexionsleistung, weil die Gesamtfläche der Retroflexion weniger Tripelkanten enthält. Denn jede Kante ist eine streuende, nicht retroflektierende Fläche. Durch Verwendung von größeren Fullcube-Tripeln bei größerem Abtastabstand zwischen Sender und Retroflektor wird der Energieverlust durch höhere Retroflexionsleistung der großen Tripel ausgeglichen.

In Abhängigkeit von der Größe des Sendestrahlbündel-Durchmessers oder seiner Form, sollten die Schlüsselweiten der Fullcube-Tripel gewählt werden. Je mehr Fullcube-Tripel vom Sendestrahlbündel erfaßt werden, um so geringer wird die prozentuale Verformung des retroflektierten Strahlenbündels ausfallen. Je geringer die Verformung, um so genauer kann mit dem Strahlenbündel gemessen werden.

Mit dem Retroflektor für Meßaufgaben mit. Laserlicht in der Fig. 16 kann stufenlos der Meßabstand und die damit verbundene Vergrößerung oder Verkleinerung des Lichtkegels des Sendestrahlbündels erreicht werden, bei relativer Konstanz der Form des retroflektierten Strahlenbündels.

## Patentansprüche

1. Verfahren zur Feinabtastung beliebiger Gegenstände, z. B. Glaskörper, Gegenstände mit reflektierenden Metall-, Lack- oder Kunststoffoberflächen, bei einem auf Retroreflexion und Polarisationsdrehung basierenden Lasersensorsystem, bei dem die retroreflektierende Fläche aus mehreren würfelförmigen Fullcube-Tripeln besteht, wobei das einfallende Laserstrahlbündel durch Vergrößerung oder Verkleinerung seiner Form auf die Gröβe der Fullcube-Tripel derart angepaßt wird, dass es bei Bewegung über den Retroreflektor in jeder Position mindestens fünf oder mehr Fullcube-Tripel zugleich berührt und so unabhängig von der Position ein konturenscharfes, von Irrstrahlen freies, form stabiles retroreflektiertes Laserstrahlbündel, erzeugt wird, und wobei die Schlüsselweite der Fullcube-Tripel 0,002 mm bis 1,4 mm beträgt.

2. Verfahren nach Anspruch 1, wobei die Reflektorfläche aus einer Fläche aus einer Vielzahl aneinandergrenzender kleiner Tripel besteht.

3. Verfahren nach Anspruch 1, wobei die von den Mikrotripeln gebildete Reflexfläche des Retroreflektors von großformatigeren Tripeln umgeben ist.

4. Verfahren nach Anspruch 1, 2 oder 3, wobei die Fullcube-Tripel zueinander absolut gleichmäßig ausgerichtet sind.

5. Verfahren nach einem oder mehreren der vorhergehenden Ansprüche, wobei das Laserstrahlbündel in Form eines Kreises oder einer Ellipse über die Mikrotripel bewegt wird.

6. Verfahren nach einem oder mehreren der vorhergehenden Ansprüche, wobei der Retroreflektor Fullcube-Tripel mit der Größe von etwa 1 mm Schlüsselweite auf weist, und von Fullcube-Tripeln (23) mit einer Schlüsselweite von 4 mm ungeben ist.

## Claims

1. Method for precise scanning of any desired objects, for example glass bodies, objects with reflecting metal, painted or plastic surfaces with a laser sensor system based on retro-reflection and polarisation rotation, wherein the retroreflecting surface consists of several dice-shaped fullcube triples, whereby the incident laser beam bundle is adapted by enlarging or reducing its form to the size of the fullcube triples in such a way that, when it is moved over the retroreflector in any position, at least five or more fullcube triples are contacted at the same time and thus an acute, form-stable retro-reflected laser beam free from extraneous rays is produced and whereby the width across the fullcube triples is 0.002 mm to 1.4 mm.

2. Method according to claim 1, wherein the reflector surface consists of a face made from a plurality of small triples arranged adjacent to each other.

3. Method according to claim 1, wherein the reflector surface of the retro-reflector formed from the microtriples is surrounded by larger-sized triples.

4. Method according to claims 1, 2 or 3, wherein the fullcube triples are aligned absolutely equally to each other.

5. Method according to one or several of the above claims, wherein the laser beam is moved in the shape of a circle or an ellipse over the microtriples.

6. Method according to one or several of the above claims, wherein the retroreflector has fullcube triples in the size of about 1 mm width across and is surrounded by fullcube triples (23) with a width across of 4 mm.

## Revendications

1. Procédé de balayage haute précision de tout objet, par exemple, éléments en verre, objets ayant des surfaces réfléchissantes métalliques, laquées ou plastiques, dans un système à capteur laser basé sur la rétroréflexion et la rotation de polarisation dans lequel la surface rétroréfléchissante consiste en plusieurs trièdres Fullcube de forme cubique, le faisceau de rayons laser entrant étant adapté, par grossissement ou réduction de sa forme, à la taille du trièdre de telle sorte que lors du déplacement au-dessus du rétroréflecteur, au moins cinq trièdres Fullcube ou plus soient touchés en même temps dans chaque position et ainsi étant produit, indépendamment de la position, un faisceau de rayons rétroréflexion de forme stable et ne comportant pas de rayons errants, et l'ouverture du trièdre Fullcube allant de 0,002 mm à 1,4 mm.

2. Procédé selon la revendication 1, dans lequel la surface rétroréfléchissante se compose d'une surface constituée d'une pluralité de petits trièdres accolés.

3. Procédé selon la revendication 1, dans lequel la surface réfléchissante formée par les microtrièdres du rétroréflecteur est entourée de trièdres de grand format.

4. Procédé selon l'une quelconque des revendications 1, 2 ou 3, dans lequel les trièdres Fullcube sont disposés les uns contre les autres de façon absolument régulière.

5. Procédé selon une ou plusieurs des revendications précédentes, dans lequel le faisceau de rayons laser est déplacé en prenant la forme d'un cercle ou d'une ellipse au-dessus des microtrièdres.

6. Procédé selon une ou plusieurs des revendications précédentes, dans lequel le rétroréflecteur présente des trièdres Fullcube dont l'ouverture est d'environ 1 mm et est entouré de trièdres Fullcube (23) ayant une ouverture de 4 mm.
